# EUROPÄISCHE PATENTSCHRIFT

(11) **EP 2 681 363 B1**
(45) Veröffentlichungstag und Bekanntmachung des Hinweises auf die Patenterteilung: **08.04.2015**
(21) Anmeldenummer: 12707483.9
(22) Anmeldetag: 29.02.2012
(51) Int. Cl.: E02D 3/026, B60F 1/04

(54) **VORRICHTUNG ZUR BODENVERDICHTUNG UND VERFAHREN ZUM AUFGLEISEN EINER VORRICHTUNG ZUR BODENVERDICHTUNG**
SOIL COMPACTING DEVICE AND METHOD FOR RERAILING A SOIL COMPACTING DEVICE
DISPOSITIF DE COMPACTAGE DU SOL ET PROCÉDÉ DE REMISE SUR RAILS D'UN DISPOSITIF DE COMPACTAGE DU SOL

(30) Priorität: 01.03.2011 DE 102011012715
(43) Veröffentlichungstag der Anmeldung: 08.01.2014
(73) Patentinhaber: BOMAG GmbH, 56154 Boppard (DE)
(72) Erfinder: DARSCHEID, Manfred, 56281 Emmelshausen (DE); JONES, Tony, Sittingbourne Kent ME9 8GB (GB); WRIGHTON, Les, Kartford Kent DA4 9AA (GB)
(74) Vertreter: Lang, Friedrich
(86) Internationale Anmeldenummer: PCT/EP2012/000879
(87) Internationale Veröffentlichungsnummer: WO 2012/116812

(56) Entgegenhaltungen:
- DE-A1-102010 054 755
- DE-U1-202008 009 037

## Beschreibung

Die Erfindung betrifft eine Vorrichtung zur Bodenverdichtung und insbesondere einen Walzenzug, mit wenigstens einem Verdichtungsfahrwerk, das über eine erste Antriebseinrichtung in einem Verdichtungsbetrieb zur Bodenverdichtung und zum Verfahren des Walzenzuges antreibbar ist

Darüber hinaus betrifft die Erfindung ein Verfahren zum Aufgleisen einer solchen Vorrichtung zur Bodenverdichtung, wobei die Vorrichtung ein Verdichtungsfahrwerk mit einer ersten Verdichtungswalze und einer zweiten Verdichtungswalze oder einem der gleichen Fahrmittel aufweist, die relativ zueinander über ein arretierbares Knickgelenk wenigstens um eine Achse senkrecht zur Bodenoberfläche verschwenkbar, über jeweils wenigstens ein Schienenfahrwerk außer Wirkeingriff mit dem Boden bringbar und in einem Schienentransportbetrieb auf wenigstens einer am Boden verlaufenden Laufschiene verfahrbar sind.

Oben genannte Vorrichtungen zur Bodenverdichtung sind aus dem Stand der Technik bekannt Sie werden meist in Form von Walzenzügen mit einer Mehrzahl an vibrierenden oder statischen Verdichtungswalzen oder ähnlichen Fahrmitteln dazu verwendet, Untergründe zu planieren und zu verdichten. Die dazu verwendeten Verdichtungswalzen können aktiv vibrierende Verdichtungswalzen oder aber statische Walzen sein, die eine Bodenverdichtung rein aufgrund ihres Gewichtes erlauben. Im Zuge der Erfindung mit umfasst sind unter dem Begriff "Verdichtungswalzen und dergleichen Fahrmittel" aber auch solche Fahrmittel, die lediglich dem Fahrbetrieb bei der Vorrichtung zur Bodenverdichtung dienen. Hierunter werden also unter anderem auch Gummi- oder dergleichen Räder, sei es aktiv angetrieben oder passiv mitlaufend mit umfasst. Entsprechend wird unter dem Begriff Verdichtungsbetrieb nicht nur ein Betriebszustand verstanden, in dem der Boden verdichtet wird, sondern auch der reine Fahrbetrieb der Baumschiene auf dem Verdichtungsfahrwerk, also insbesondere bei deaktivierten Verdichtungsmitteln zugerechnet.

Solche Vorrichtungen zur Bodenverdichtung haben meist ein Gewicht von mehreren Tonnen, was insbesondere den Transport der Vorrichtungen zur Baustelle erschwert Insbesondere bei Baustellen im Gleisbau ist es daher bisher nicht möglich gewesen, die oft sehr großen Bodenverdichtungsvorrichtungen an die Baustellen zu transportieren. Ersatzweise wurde daher auf sehr viel leichtere Bodenverdichtungsmaschinen zurückgegriffen, und zwar auf solche Maschinen, die auf einem Güterwagon transportiert werden konnten.

Aufgrund des sehr hohen Gewichts der bekannten Vorrichtungen zur Bodenverdichtung ist ein Be-und Entladen auf und von Güterwagons nicht oder nur sehr schwer möglich. Darüber hinaus besteht aufgrund des im Verdichtungs- oder reinen Fahrbetrieb mit dem Boden in Wirkeingriff stehenden Verdichtungsfahrwerks die Gefahr der Beschädigung der zum gleisgebundenen Transport verwendeten Laufschienen.

Aufgabe der vorliegenden Erfindung ist es folglich, eine Vorrichtung zur Bodenverdichtung der Eingangs genannten Art anzubieten, die auf einfache Art und Weise schienengebunden an eine Baustelle transportiert und von dieser abtransportiert werden kann.

Die Lösung der Aufgabe gelingt mit einer Vorrichtung und einem Verfahren gemäß einem der unabhängigen Ansprüche. Bevorzugte Weiterbildungen sind in den abhängigen Ansprüchen angegeben.

Die Aufgabe wird somit erfindungsgemäß in einem ersten Aspekt durch eine Vorrichtung zur Bodenverdichtung und insbesondere einen Walzenzug mit wenigstens einem Verdichtungsfahrwerk, das über eine erste Antriebseinrichtung in einem Verdichtungsbetrieb zur Bodenverdichtung und zum Verfahren des Walzenzuges antreibbar ist, dadurch gelöst, dass wenigstens ein Schienenfahrwerk für einen Schienentransportbetrieb vorgesehen ist, in dem die Vorrichtung auf wenigstens einer am Boden verlaufenden Laufschiene verfahrbar ist, wobei das Schienenfahrwerk über wenigstens ein Stellmittel derart bewegbar an der Vorrichtung angeschlagen ist, dass es mit der am Boden verlaufenden Laufschiene derart in Wirkeingriff bringbar ist, dass das Verdichtungsfahrwerk außer Wirkeingriff mit dem Boden tritt. Die erfindungsgemäße Vorrichtung umfasst weiter eine Lenkeinrichtung, über die die Vorrichtung zur Bodenverdichtung, insbesondere der Walzenzug, im Verdichtungsbetrieb lenkbar ist Die Lenkeinrichtung ist somit in bekannter Weise derart ausgebildet, dass sie, beispielsweise von einem Fahrstand der Vorrichtung aus, eine Lenkung der ersten Verdichtungswalze und/oder der zweiten Verdichtungswalze oder dergleichen Fahrmittel ermöglicht. Weiter umfasst die erfindungsgemäße Vorrichtung bevorzugt auch eine Blockiereinrichtung, die zur Arretierung der Lenkeinrichtung in wenigstens einer Lenkstellung zumindest im Schienentransportbetrieb ausgebildet ist Damit ist es möglich, die Lenkereinrichtung zu Blockieren beziehungsweise eine Lenkverstellung der ersten Verdichtungswalze und der zweiten Verdichtungswalze oder dergleichen Fahrmittel relativ zueinander auf Wunsch und reversibel zu blockieren. Insbesondere für eine Bewegung der Vorrichtung im Schienentransportbetrieb ist es besonders günstig, wenn eine Lenkbewegung der Verdichtungswalzen oder dergleichen Fahrmittel zueinander ausgeschlossen ist, um eine sichere und stabile Schienenfahrt zu ermöglichen.

Unter Verdichtungsbetrieb wird, wie bereits erwähnt, im Umfang der Erfindung der Betrieb der Bodenverdichtungsvorrichtung verstanden, in dem das Verdichtungsfahrwerk mit dem Boden in Wirkeingriff steht. Der Verdichtungsbetrieb umfasst also sowohl das einfache Verfahren der Bodenverdichtungsvorrichtung auf dem Verdichtungsfahrwerk als auch einen solchen Betrieb, bei dem über die geeigneten Verdichtungsmittel, beispielsweise aktivierbare Schwungmassen am Verdichtungsfahrwerk, der Boden verdichtet oder planiert wird. Unter Schienentransportbetrieb wird dagegen der Betrieb verstanden, in dem die Bodenverdichtungsvorrichtung entlang der Laufschiene verfahren wird, wobei dann das Verdichtungsfahrwerk vollständig außer Wirkeingriff mit dem Boden und insbesondere relativ zur Laufschiene angehoben ist Der Schienentransportbetrieb folgt üblicherweise auf einen Rangierbetrieb, bei dem die Vorrichtung auf die Laufschiene aufgegleist wird. Während dieses Rangierbetriebs erfolgt das Ausrichten der Bodenverdichtungsvorrichtung derart, dass das Schienenfahrwerk mit der Laufschiene in Wirkeingriff und das Verdichtungsfahrwerk außer Wirkeingriff gebracht werden kann. Gerade bei den sehr großen Bodenverdichtungsvorrichtungen stellt dieses Aufgleisen ein besonderes Problem dar, wobei, wie im Folgenden noch detailliert beschrieben, im Umfang der Erfindung dazu ein erfindungsgemäßes Verfahren zum Aufgleisen einer solchen Vorrichtung zur Bodenverdichtung der vorgenannten Art angeboten wird, das im Vergleich zum im Stand der Technik bekannten Möglichkeiten zum Aufgleisen von Maschinen besondere Vorteile bietet

Durch die Ausbildung des Schienenfahrwerks derart, dass es so mit der Laufschiene in Wirkeingriff bringbar ist, dass das Verdichtungsfahrwerk vollständig außer Wirkeingriff mit dem Boden tritt, kann die Bodenverdichtungsvorrichtung sowohl im Schienentransportbetrieb als auch im vorhergehenden Rangierbetrieb ohne Beschädigung der Laufschienen aufgegleist bzw. verfahren werden.

Das Schienenfahrwerk ist dabei vorzugsweise derart an der Vorrichtung angelenkt, dass es mit wenigstens einem geeigneten Stellmittel verschwenkbar ist und so das Verdichtungsfahrwerk außer Wirkeingriff mit dem Boden gebracht und insbesondere angehoben werden kann. Ein solches Stellmittel kann beispielsweise ein Hydraulikelement, insbesondere eine Zylinder-Kolben-Einheit, sein, das über einen Hydraulikkompressor der Bodenverdichtungsvorrichtung angetrieben werden kann. Die Steuerung des Stellmittels erfolgt über eine geeignete Steuereinrichtung, die vorzugsweise zudem den Zustand der Blockiereinrichtung, beispielsweise über einen geeigneten Sensor oder Schalter, überwacht und berücksichtigt und besonders bevorzugt auch die Blockiereinrichtung zwischen ihrer Blockierposition und der Freigabeposition steuert In diesem Zusammenhang kann die Steuereinrichtung zudem in der Weise ausgebildet sein, dass sie beispielsweise die Lenkstellung ermittelt und eine Auslösung der Blockiereinrichtung zur Arretierung nur in einer bestimmten Lenkstellung der ersten Verdichtungswalze und der zweiten Verdichtungswalze oder dergleichen Fahrmittel erlaubt, insbesondere bei einer Lenkstellung "Geradeausfahrt".

Beim Aufgleisvorgang wird dann die Bodenverdichtungsvorrichtung insbesondere mit einer ersten Verdichtungswalze des Verdichtungsfahrwerkes so relativ zu der Laufschiene angeordnet, dass das Schienenfahrwerk über das Stellmittel verschwenkt und mit der Laufschiene in Wirkeingriff bringbar ist.

Bei einem Verdichtungsfahrwerk mit zwei oder mehr Verdichtungswalzen oder dergleichen Fahrmitteln, kann auf diese Weise zuerst die erste Verdichtungswalze aufgegleist und von der Laufschiene abgehoben werden, bevor dann die zweite und eventuell folgende Verdichtungswalzen oder dergleichen Fahrmittel aufgegleist bzw. angehoben werden. Dies reduziert die Belastung der Laufschiene deutlich.

Vorzugsweise ist an der Vorrichtung eine zweite Antriebseinrichtung vorgesehen, über die das Schienenfahrwerk unabhängig vom Verdichtungsfahrwerk antreibbar ist Eine solche Antriebseinrichtung kann beispielsweise ein Hydraulikmotor sein, der über einen (gemeinsamen) Hydraulikkompressor der Bodenverdichtungsvorrichtung angetrieben werden kann.

Durch die Ausbildung zweier unabhängig voneinander agierender Antriebseinrichtungen ist es möglich, die zugeordneten Verdichtungs- bzw. Schienenfahrwerke ebenfalls unabhängig voneinander zu betreiben, sodass insbesondere beim Aufgleisen bzw. Abgleisen der Vorrichtung gezielte Verfahrimpulse initiierbar sind. Darüber hinaus bieten sich durch diese Ausführungsform erhebliche betriebswirtschaftliche Vorteile, da die eigenständig angetriebene zweite Antriebseinrichtung vollständig unterschiedlichen Antriebsanforderungen unterliegt als die erste Antriebseinrichtung. Grundsätzlich ist es allerdings auch möglich, eine einzeige Antriebseinrichtung vorzusehen, die über eine geeignete Steuereinrichtung zum jeweiligen Antrieb des Schienenfahrwerks und des Verdichtungsfahrwerks ausgebildet ist Grundsätzlich ist es aber auch möglich, mit einer gemeinsamen Antriebseinrichtung das Verdichtungs- und das Schienenfahrwerk anzutreiben, wobei die hierfür erforderliche Steuerung ebenfalls beispielsweise mithilfe der verstehend bereits angeführten Steuereinrichtung und beispielsweise geeigneten Ventilen etc. erreicht werden kann.

Hinsichtlich der Betriebssicherheit von Vorteil ist eine Ausführungsform, bei der die erste und/oder die zweite Antriebseinrichtung derart ausgebildet und über eine Steuereinrichtung ansteuerbar sind, dass im zuvor beschriebenen Rangierbetrieb sowohl das Verdichtungsfahrwerk als auch das Schienenfahrwerk antreibbar, dagegen im Verdichtungsbetrieb und/oder im Schienentransportbetrieb nur das Verdichtungsfahrwerk bzw. das Schienenfahrwerk antreibbar sind. Das bedeutet, dass beim Aufgleisen, also beim Rangieren der Vorrichtung, beide Fahrwerke über ihre jeweiligen Antriebseinrichtungen ansteuerbar sind. Im reinen Verdichtungsbetrieb bzw. Schienentransportbetrieb dagegen kann jeweils nur das in diesem Betriebszustand mit dem Boden im Wirkeingriff stehende Fahrwerk angetrieben werden. Auf diese Weise kann es nicht passieren, dass im Schienentransportbetrieb versehentlich das Verdichtungsfahrwerk bzw. eine Verdichtungswalze angetrieben wird, was ein hohes Sicherheitsrisiko darstellen würde. Dagegen ermöglicht eine solche Ausführungsform im Rangierbetrieb den parallelen Betrieb der zur Verfügung stehenden Fahrwerke, um das einfache Auf- und Abgleisen der Vorrichtung zu erlauben.

An dieser Stelle sei angemerkt, dass sämtliche Merkmale natürlich auch bei einer Vorrichtung realisierbar sind, die über eine einzige Antriebseinrichtung verfügt, welche insbesondere über geeignete Kupplungsmittel beide Fahrwerke, also das Verdichtungsfahrwerk und das Schienenfahrwerk, antreibt

Bei einer besonderen Ausführungsform der Vorrichtung weist das Verdichtungsfahrwerk eine erste Verdichtungswalze und wenigstens eine zweite Verdichtungswalze oder ein dergleichen Fahrmittel auf, die unabhängig voneinander über das wenigstens eine Schienenfahrwerk außer und/oder in Wirkeingriff mit dem Boden bringbar und/oder haltbar sind. Über die entsprechende Ausbildung des Schienenfahrwerks bzw. eines oder mehrerer geeigneter Stellmittel kann auf diese Weise je nach örtlichen Gegebenheiten jeweils eine bestimmte Verdichtungswalze oder ein dergleichen Fahrmittel außer oder in Wirkeingriff mit dem Boden gebracht oder in dieser Position gehalten werden. Auf diese Weise ist also ein gezielter Wechsel zwischen dem Schienentransportbetrieb, dem Verdichtungsbetrieb und dem Rangierbetrieb der Vorrichtung möglich. Das bedeutet, wie zuvor bereits erwähnt, dass es insbesondere im Rangierbetrieb möglich ist, eine Verdichtungswalze des Verdichtungsfahrwerkes im eingegleisten Zustand, also vom Boden und der Laufschiene abgehoben, zu verfahren, während die andere Verdichtungswalze oder ein dergleichen Fahrmittel noch in Bodenkontakt steht. Im Rangierbetrieb erlaubt dies das genaue Ausrichten unter Vermeidung von Beschädigungen der Laufschiene.

Die Vorrichtung verfügt zudem vorzugsweise über wenigstens ein erstes und wenigstens ein zweites Schienenfahrwerk, die derart angeordnet und ausgebildet sind, dass die erste Verdichtungswalze über das erste Schienenfahrwerk und die zweite Verdichtungswalze über das zweite Schienenfahrwerk unabhängig voneinander außer und/oder in Wirkeingriff mit dem Boden bringbar und/oder haltbar sind. Auf diese Weise kann über die jeweiligen Schienenfahrwerke der einzelnen Verdichtungswalzen gezielt bei jeder Walze zwischen dem Verdichtungsbetrieb, dem Rangierbetrieb und dem Schienentransportbetrieb gewechselt werden. In diesem Zusammenhang ist es sinnvoll, eine geeignete Steuereinrichtung vorzusehen (die beispielsweise die vorstehend bereits erwähnte Steuereinrichtung sein kann), die den Wechsel zwischen dem Verdichtungs- bzw. Schienentransportbetrieb in den Rangierbetrieb oder umgekehrt detektiert und vorzugsweise erst, wenn sämtliche Verdichtungswalzen des Verdichtungsfahrwerkes außer Bodenkontakt stehen bzw. die jeweils zugeordneten Schienenfahrwerke eingegleist sind, einen Wechsel vom Rangierbetrieb in den Schienentransportbetrieb erlaubt Selbiges gilt natürlich auch vom Wechsel des Schienentransportbetriebs in den Verdichtungsbetrieb, wobei hier erst dann, wenn sämtliche Verdichtungswalzen ausgegleist und die zugeordneten Schienenfahrwerke außer Eingriff mit der Laufschiene stehen, der Wechsel in den Verdichtungsbetrieb ermöglicht wird (Gleiches kann ferner auch für die Steuerung der Blockiereinrichtung der Lenkeinrichtung gelten). Hierzu sind dann geeignete Sensoren und Steuereinrichtungen vorhanden, die die jeweiligen Betriebszustände detektieren verwendbar.

Vorzugsweise ist die Vorrichtung derart ausgebildet, dass im Rangierbetrieb wenigstens das der ersten Verdichtungswalze zugeordnete erste Schienenfahrwerk zusammen mit der zweiten Verdichtungswalze antreibbar und insbesondere darüber die Vorrichtung verfahrbar ist, oder umgekehrt Umgekehrt bedeutet hier, dass natürlich die Vorrichtung auch mittels anderer Kombinationen der Fahrwerke entsprechend antreibbar bzw. verfahrbar sein kann; also kann beispielsweise eine Kombination aus zweitem Schienenfahrwerk und erster Verdichtungswalze zusammen antreibbar sein. Dies erlaubt auf einfache Weise das Aufgleisen der Vorrichtung, wobei ein sukzessives Aufgleisen der Verdichtungswalzen möglich wird.

Hinsichtlich des im Folgenden noch detailliert beschriebenen erfindungsgemäßen Verfahrens zum Aufgleisen einer Vorrichtung zur Bodenverdichtung besonders von Bedeutung ist eine Ausführungsform, bei der die erste Verdichtungswalze relativ zu der zweiten Verdichtungswalze über eine als arretierbares Knickgelenk ausgebildete Lenkeinrichtung wenigstens um eine Achse senkrecht zur Bodenoberfläche verschwenkbar ist, wobei insbesondere eine Steuereinrichtung vorgesehen ist, die im Schienentransportbetrieb das Verfahren der Vorrichtung über das Schienenfahrwerk auf der Laufschiene nur dann erlaubt, wenn das Knickgelenk der Lenkeinrichtung durch die Blockiereinrichtung arretierbar, insbesondere arretiert, ist. Der Grundgedanke dieser Ausführungsform leitet sich aus der Erkenntnis ab, dass besonders bevorzugt eine Steuereinrichtung vorhanden ist, die im Schienentransportbetrieb das Verfahren der Vorrichtung über das Schienenfahrwerk auf der Laufschiene nur dann erlaubt, wenn die Lenkeinrichtung durch die Blockiereinrichtung blockiert beziehungsweise arretiert ist. Das bedeutet, dass im reinen Schienentransportbetrieb, der beispielsweise gekennzeichnet ist durch hohe Geschwindigkeiten, das Verfahren der Vorrichtung eben nur dann erlaubt ist, wenn eine Sicherung der Lenkeinrichtung und insbesondere dieses Knickgelenkes nachgewiesen wurde. Hier sind entsprechende Sensoren und/oder Schalter verwendbar, die die Detektion der Arretierung ermöglichen und entsprechende Steuersignale an die Steuereinrichtung weitergeben, die dann ihrerseits entsprechende Steuersignale an die erste bzw. eine eventuell vorhandene zweite Antriebseinrichtung übermittelt

Vorzugsweise ist in diesem Zusammenhang das Knickgelenk über wenigstens einen Arretierungsbolzen oder dergleichen Arretierungsmittel arretierbar, wobei wenigstens ein Sensorelement derart vorgesehen ist, dass die Arretierungsposition dieses Arretierungsmittels detektiert und ein entsprechendes Detektionssignal an die Steuereinrichtung weiterleitet Natürlich kann anstelle eines Arretierungsbolzens jedes andere aus dem Stand der Technik bekannte Mittel zur Arretierung des Knickgelenkes verwendet werden, solange die Detektion dessen Arretierungsposition möglich ist.

Bei einer besonderen Ausführungsform ist die Steuereinrichtung derart ausgebildet, dass sie bei nicht arretiertem Knickgelenk ein Verfahren der Vorrichtung zur Bodenverdichtung nur in einem Rangierbetrieb, d.h. also beispielsweise bei reduzierter Geschwindigkeit erlaubt. Gerade durch eine solche Ausführungsform ist es möglich eine Bodenverdichtungswalze sehr einfach und sicher auf eine Laufschiene aufzugleisen, wie im Folgenden noch näher beschrieben wird.

Von Vorteil sind in diesem Zusammenhang insbesondere die Kombination aus wenigstens zwei Verdichtungswalzen, die relativ zueinander über das Knickgelenk verschwenkbar sind und die Ausrüstung dieser Verdichtungswalzen derart, dass sie unabhängig voneinander außer und mit Wirkeingriff mit dem Boden gebracht werden können, d.h. also das unabhängig voneinander ein Wechsel zwischen dem Verfahren über ein Schienenfahrwerk und dem Verfahren über eine Verdichtungswalze möglich ist. Durch das Knickgelenk kann die erfindungsgemäße Bodenverdichtungsvorrichtung sehr einfach auf die Laufschiene aufgegleist werden, wobei insbesondere nur das zuerst auf die Laufschiene aufzugleisende Schienenfahrwerk genau ausgerichtet werden muss. Wie im Folgenden beschrieben, erfolgt die Ausrichtung aller weiteren Schienenfahrwerke im Zuge der Schleppkurvenausrichtung automatisch.

Das erfindungsgemäße Verfahren zum Aufgleisen einer Vorrichtung zur Bodenverdichtung gemäß der vorgenannten Art und insbesondere einer Vorrichtung, die ein Verdichtungsfahrwerk mit einer ersten Verdichtungswalze und einer zweiten Verdichtungswalze oder dergleichen Fahrmittel aufweist, die relativ zueinander über ein arretierbares Knickgelenk wenigstens um eine Achse senkrecht zur Bodenoberfläche verschwenkbar, über jeweils wenigstens ein Schienenfahrwerk außer Wirkeingriff mit dem Boden bringbar und in einem Schienentransportbetrieb auf wenigstens einer am Boden verlaufenden Laufschiene verfahrbar sind, umfasst die folgenden Schritte:
a) Anfahren der wenigstens einen Laufschiene mittels des Verdichtungsfahrwerks in einer Eingleisrichtung derart, dass das der ersten Verdichtungswalze zugeordnete erste Schienenfahrwerk mit dieser in Wirkeingriff gebracht werden kann;
b) Bewegen des ersten Schienfahrwerkes in Wirkeingriff mit der Laufschiene derart, dass die erste Verdichtungswalze außer Wirkeingriff mit dem Boden tritt; und
c) Verfahren der Vorrichtung in Eingleisrichtung mittels des ersten Schienenfahrwerkes und der zweiten Verdichtungswalze entlang der Laufschiene;
d) nach dem automatischen Ausrichten des zweiten Schienenfahrwerks durch das Verfahren der Vorrichtung in Eingleisrichtung, Bewegen des zweiten Schienfahrwerkes in Wirkeingriff mit der Laufschiene derart, dass auch die zweite Verdichtungswalze außer Wirkeingriff mit dem Boden tritt; und
e) Arretieren der Lenkeinrichtung, insbesondere des Knickgelenkes, zwischen der ersten und der zweiten Verdichtungswalze durch ein Aktivieren der Blockiereinrichtung.

Weitere bevorzugte Verfahrensschritte sind beispielsweise insbesondere vor dem Schritt e) das Prüfen der Lenkstellung und das Abfragen, ob die Lenkstellung der Lenkstellung "Geradeausfahrt" entspricht; Prüfen, ob der Wirkeingriff des ersten Schienenfahrwerks (Schritt a)) und/oder des zweiten Schienenfahrwerks (Schritt d)) korrekt hergestellt ist, etc.

Die erfindungsgemäße Vorrichtung bzw. das erfindungsgemäße Verfahren profitiert davon, dass nur jeweils die erste Verdichtungswalze so mit der Laufschiene ausgerichtet werden muss, dass ein passgenauer Wirkeingriff mit dem zugeordneten Schienenfahrwerk möglich ist Nachdem dieser Wirkeingriff hergestellt und insbesondere die erste Verdichtungswalze vom Boden abgehoben wurde, kann die erfindungsgemäße Vorrichtung entlang der Eingleisrichtung weiter verfahren werden, wodurch die "im Schleppbetrieb folgenden" zweiten und eventuell weiteren Verdichtungswalzen sich automatisch relativ zur Laufschiene ausrichten und dann sehr einfach und ohne langwierige Rangierarbeiten eingegleist werden können.

Darüber hinaus garantiert das erfindungsgemäße Verfahren bzw. die erfindungsgemäße Vorrichtung, dass die jeweiligen Laufschienen, auf denen die Vorrichtung aufgegleist bzw. von denen sie abgegleist wird nur geringfügigen Querbelastungen und insbesondere Beschädigungen ausgesetzt werden, da es möglich ist durch die Knickgelenkanordnung in Kombination mit dem oder den verschwenkbaren Schienenfahrwerken die Vorrichtung so auf und ab zugleisen, dass möglichst geringer Kontakt zwischen dem Verdichtungsfahrwerk und den Laufschienen vorherrscht. Dies ist insbesondere auch beim Abgleisen der Vorrichtung der Fall, die aufgrund des freibeweglichen Knickgelenks im Rangierbetrieb sehr einfach seitlich von der Laufschiene heruntergefahren werden kann, wobei jeweils nur eine Bodenverdichtungswalze die Laufschiene mit Verkehrslasten beaufschlagt Darüber hinaus ermöglicht die erfindungsgemäße Ausführung der Vorrichtung und des Verfahrens einen sicheren und stabilen Schienentransport durch eine Blockade von Lenkbewegungen, insbesondere im Maschinenrahmen bei knickgelenkten Vorrichtungen.

Weitere Ausführungsformen der Erfindung ergeben sich durch die Unteransprüche.

Im Folgenden wird die Erfindung anhand von Ausführungsbeispielen beschrieben, die durch die beiliegenden Zeichnungen näher erläutert werden. Hierbei zeigen schematisch:
- Fig. 1: eine Seitenansicht einer Ausführungsform der erfindungsgemäßen Vorrichtung zur Bodenverdichtung;
- Fig. 2: die Ausführungsform gemäß Figur 1 mit einer Ausführungsform einer Antriebsverschaltung; und
- Fig. 3 bis 7: eine Abfolge einer Ausführungsform des erfindungsgemäßen Verfahrens zum Aufgleisen der Bodenverdichtungsvorrichtung gemäß Figur 1.

Im Folgenden werden für gleiche und gleich wirkende Bauteile dieselben Bezugsziffern verwendet, wobei zur Unterscheidung bisweilen Hochindizes ihre Anwendung finden.

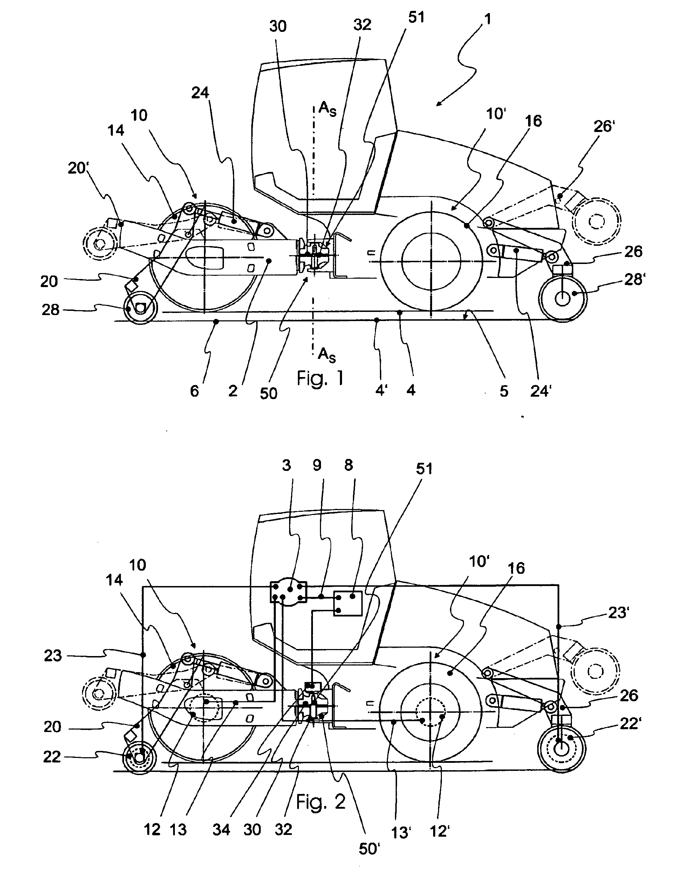

Figur 1 zeigt eine Ausführungsform der erfindungsgemäßen Vorrichtung zur Bodenverdichtung und insbesondere einen Walzenzug 1 in einer Seitenansicht

Der Walzenzug 1 besteht aus einem Tragrahmen 2, an dem ein Verdichtungsfahrwerk 10 angeordnet ist, um den Walzenzug 1 zu verfahren und eine Bodenverdichtung des Bodens 4 vorzunehmen.

Das Verdichtungsfahrwerk 10 weist eine erste Verdichtungswalze 14 und eine zweite Verdichtungswalze 16 bzw. Antriebsräder auf, die in einem Tragrahmen 2 angeordnet sind. Über ein im Tragrahmen angeordnetes Knickgelenk 30 können die beiden Verdichtungswalzen 14, 16 relativ zueinander um eine senkrecht zur Bodenoberfläche 5 des Bodens 4 verlaufende Schwenkachse A_{S} verschwenkt werden. Auf diese Weise kann der Walzenzug 1 gelenkt werden.

Bei dieser Ausführungsform des Walzenzuges 1 ist die erste Verdichtungswalze 14 als eine Vibrationswalze ausgebildet, die aktiv zur Bodenverdichtung in Vibration versetzt werden kann. Die zweite Verdichtungswalze 16 dagegen ist hier lediglich eine Antriebswalze in Form mehrerer Gummiräder, die dem Verfahren bzw. dem Antrieb des Walzenzuges 1 im Verdichtungsbetrieb dient, also, wie einleitende bereits erwähnt, beim tatsächlichen Verdichten des Bodens 4 aber auch beim einfachen Verfahren des Walzenzuges 1. Im Verdichtungsbetrieb stehen die beiden Verdichtungswalzen 14, 16 des Verdichtungsfahrwerks 10 mit dem Boden 4 bzw. dessen Bodenoberfläche 5 in Wirkeingriff, sodass der Walzenzug 1 auf dem Boden 4 verfahrbar ist Bei Bedarf kann dann über eine Aktivierung des Verdichtungsmittels (nicht dargestellt) der ersten Verdichtungswalze 14 eine aktive Bodenverdichtung vorgenommen werden. Das Knickgelenk 30 ist somit Teil einer Lenkeinrichtung 50, deren Aufgabe definitionsgemäß darin liegt, Mittel zur Verfügung zu stellen, die eine Lenkbarkeit der Vorrichtung 1 ermöglichen (was vorliegend insbesondere durch das Knickgelenk 30 erreicht wird).

Weiter dargestellt sind die bei dieser Ausführungsform den jeweiligen ersten und zweiten Verdichtungswalzen 14 und 16 zugeordneten, verschwenkbaren Schienenfahrwerke 20, 26, die hier in zwei unterschiedlichen Betriebszuständen einmal mit gestrichelter und einmal mit durchgezogener Linie dargestellt sind. Die Schienenfahrwerke 20, 26 sind über jeweils ein Stellmittel 24 derart verschwenkbar an dem Walzenzug 1 und hier am Tragrahmen 2 angeschlagen, dass sie von einer abgesenkten Position, (hier dargestellt mit durchgezogenen Linien) und einer angehobenen Position (hier dargestellt mit gestrichelten Linien) verschwenkt werden können.

In der hier gestrichelt dargestellten, angehobenen Position befindet sich der Walzenzug 1 im sogenannten Verdichtungsbetrieb, wobei die Verdichtungswalzen 14, 16 des Verdichtungsfahrwerks 10 mit dem Boden 4 in Wirkeingriff stehen.

In der verschwenkten und nicht gestrichelt dargestellten Position stehen die Schienenfahrwerke 20, 26 bzw. deren Rollen 28 mit einer am Boden (jetzt dargestellt durch das Bezugszeichen 4') verlaufenden Laufschiene 6 in Wirkverbindung, und zwar derart, dass die Verdichtungswalzen 14, 16 außer Wirkeingriff mit dem Boden 4' stehen. Die Verdichtungswalzen 14, 16 sind also im verschwenkten Zustand der Schienenfahrwerke 20, 26 vom Boden 4' so abgehoben, dass ein widerstandsfreies Verfahren des Walzenzuges 1 entlang der Laufschienen 6 möglich ist Dieser Betriebszustand wird als Schienentransportbetrieb bezeichnet. Er dient dem gleisgebundenen Verfahren des Walzenzuges 1 entlang der Laufschienen 6, beispielsweise zu einer Baustelle, wo dann der Walzenzug 1 ausgegleist werden kann.

Schematisch dargestellt ist in Fig. 1 das am Tragrahmen 2 angeordnete Knickgelenk 30 der Lenkeinrichtung 50, das das Verschwenken der beiden Verdichtungswalzen 14, 16 relativ zueinander um die Achse A_{S} erlaubt. Im (gestrichelt dargestellten) Verdichtungsbetrieb, in dem also der Walzenzug 1 zum Verdichten des Bodens 4 verwendet wird bzw. in dem der Walzenzug 1 mit Kontakt zum Boden 4' auf dem Verdichtungsfahrwerk 10 verfahren werden kann, ist dieses Knickgelenk 30 vorzugsweise nicht arretiert, sodass der Walzenzug 1 über ein Verschwenken der Verdichtungswalzen 14, 16 im Knickgelenk 30 gelenkt werden kann.

Im ebenfalls in Fig. 1 dargestellten Schienentransportbetrieb, bei dem die Schienenfahrwerke 20, 26 die Verdichtungswalzen 14, 16 vom Boden 4' und insbesondere von den Laufschienen 6 abheben, ist die Lenkeinrichtung 50, insbesondere das Knickgelenk 30, über eine Blockiereinrichtung 51, konkret einen Arretierungsbolzen 32, arretierbar, um die zuverlässige Führung des Walzenzuges 1 auf den Laufschienen 6 zu garantieren. Die Blockereinrichtung 51 ist mit anderen Worten in der Weise ausgebildet, dass sie zwischen eine die Lenkeinrichtung blockierenden Position, in der Lenkstellung der beiden Verdichtungswalzen 14, 16 zueinander festgestellt ist, und einer freigebenden beziehungsweise nicht blockierenden Position, in die eine Lenkbewegung der ersten zur zweiten Verdichtungswalze 14, 16 möglich ist, verstellbar.

In Fig. 2 ist die Ausführungsform aus Fig. 1 um die zum Antrieb der unterschiedlichen Fahrwerke 10, 20, 26 nötigen Antriebseinrichtungen 12, 22 ergänzt Bei dieser Ausführungsform umfasst jede Verdichtungswalze 14, 16 des Verdichtungsfahrwerkes 10 eine eigene Antriebseinheit, nämlich eine erste Antriebseinrichtung 12. Diese erste Antriebseinrichtung 12 ist bei dieser Ausführungsform als ein Hydraulikmotor ausgebildet, der über wenigstens eine Hydraulikleitung 13 mit einer Hydraulikpumpe 3 verbunden ist Über die Hydraulikpumpe 3 wird der zum Antrieb der jeweiligen ersten Antriebseinrichtungen 12 nötige Hydraulikdruck zur Verfügung gestellt

Weiter vorgesehen ist eine Steuereinrichtung 8, die über wenigstens eine Steuerleitung 9 mit der Hydraulikpumpe 3 verbunden ist und die gezielte Ansteuerung der ersten Antriebseinrichtungen 12 und somit eine Ansteuerung der Verfahrgeschwindigkeit insbesondere im Verfahrrichtung des Walzenzuges 1 im Verdichtungsbetrieb erlaubt Die Steuereinrichtung 8 ist ferner in der Weise ausgebildet, dass sie die Lenkeinrichtung 50 und die Blockiereinrichtung 51 ansteuert.

Weiter vorgesehen sind zweite Antriebseinrichtungen 22 an den Schienenfahrwerken 20, 26 die den aktiven Antrieb der zugeordneten Rollen 28 erlauben. Auch diese zweiten Antriebseinrichtungen 22 stehen über Hydraulikleitungen 23 mit der Hydraulikpumpe 3 in Verbindung, sodass über diese der nötige Hydraulikdruck zur Verfügung gestellt werden kann. Auch hier ist eine Ansteuerung über die Steuereinrichtung 8 möglich.

Die Steuereinrichtung 8 ist bei dieser Ausführungsform so ausgebildet, dass in Abhängigkeit des Betriebszustandes des Walzenzuges 1, also dem Verdichtungsbetrieb, dem Schienentransportbetrieb oder dem Rangierbetrieb nur bestimmte Antriebseinrichtungen 12, 22 aktivierbar sind.

So kann im reinen Verdichtungsbetrieb, also beispielsweise beim Verfahren des Walzenzuges 1 oder dem Bodenverdichten über die Verdichtungswalzen 14, 16, nur die jeweils erste Antriebseinrichtung 12 aktiviert werden. Die in diesem Zustand angehobenen Schienenfahrwerke 20, 26 (gestrichelt dargestellt) sind auf diese Weise zwingend deaktiviert, sodass keine unbeabsichtigte Aktivierung und insbesondere kein Antrieb der Rollen 28 möglich sind.

Dagegen sind im reinen Schienentransportverkehr, also bei angehobenen Verdichtungswalzen 14, 16, nur die jeweils zweiten Antriebseinrichtungen 22 aktivierbar, während die ersten Antriebseinrichtungen 12, der ersten und zweiten Verdichtungswalzen 14, 16 deaktiviert sind.

Ausschließlich im sogenannten Rangierbetrieb, der beispielsweise beim Auf- oder Abgleisen des Walzenzuges 1 auf die oder von der Laufschiene 6 initiiert wird, können die Antriebseinrichtungen 12, 22 im Mixbetrieb aktiviert werden. Mixbetrieb bedeutet, dass beispielsweise, dass das erste Schienenfahrwerk 20 zusammen mit der zweiten Verdichtungswalze 16 oder die erste Verdichtungswalze 14 zusammen mit dem zweiten Schienenfahrwerk 26 aktivierbar und insbesondere durch die jeweiligen Antriebseinrichtungen 12, 22 antreibbar sind.

Wie zuvor erwähnt, wird in diesem Rangierbetrieb der Arretierungsbolzen 32 in eine Dearretierungsposition bewegt, um eine Bewegung des Knickgelenkes 30 und insofern ein Verschwenken der beiden Verdichtungswalzen 14, 16 relativ zueinander zu ermöglichen. Erst bei reinem Schienentransportbetrieb, also bei abgehobenen Verdichtungswalzen 14, 16 arretiert der Arretierungsbolzen 32 das Knickgelenk 30, wobei die resultierende Arretierungsposition über ein Sensorelement 34 detektiert wird.

Das Sensorelement 34 steht mit der Steuereinrichtung 8 in Verbindung, so dass die Arretierungsposition des Arretierungsbolzens 32 über das Sensorelement 34 an die Steuereinrichtung 8 weitergegeben werden kann. Diese kann dann in Abhängigkeit des Arretierungszustandes Einschränkungen oder Freigaben an die Hydraulikpumpe bzw. die jeweiligen Antriebseinrichtungen 12, 22 erteilen. So kann beispielsweise aus Sicherheitsgründen die Verfahrgeschwindigkeit des Walzenzuges 1 im Schienentransportbetrieb reduziert werden, wenn sich der Arretierungsbolzen 32 nicht in der Arretierungsposition befindet bzw. das Knickgelenk 30 nicht arretiert ist. Ähnliche Einschränkungen können aufgrund des Detektionssignales hinsichtlich der Aktivierbarkeit der verschiedenen Antriebseinrichtungen 12, 22 getroffen werden. Beispielsweise ist es möglich einen Mixbetrieb zwischen den ersten und zweiten Antriebseinrichtungen 12, 22 nur dann zu erlauben, wenn der Arretierungsbolzen 32 sich nicht in der Arretierungsposition befindet.

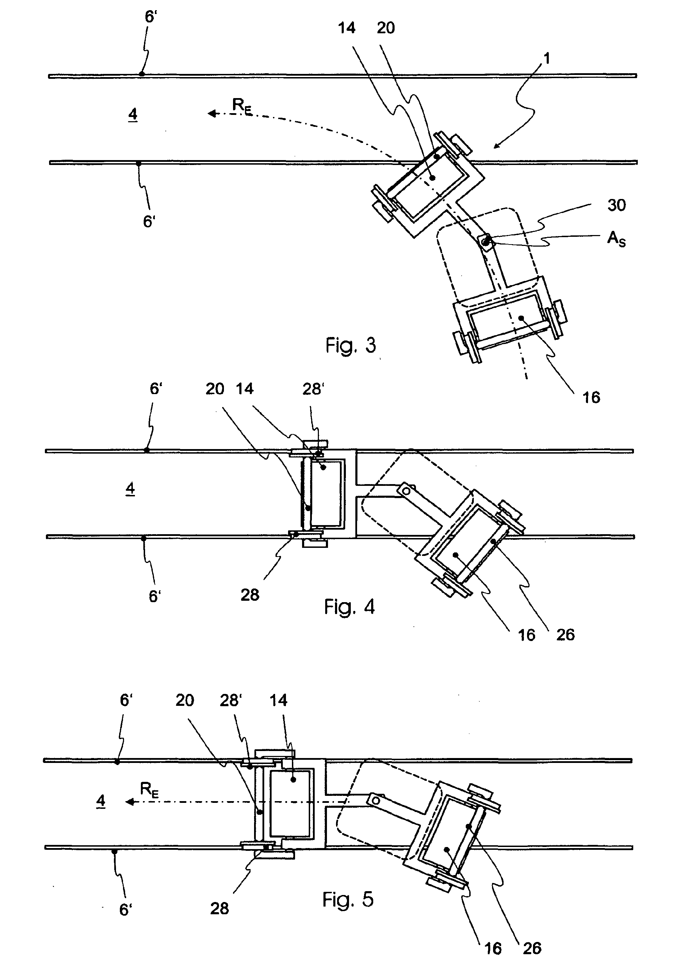

Die Fig. 3 bis 7 zeigen eine Ausführungsform des erfindungsgemäßen Verfahrens zum Aufgleisen der zuvor beschriebenen Vorrichtung zur Bodenverdichtung bzw. des erfindungsgemäßen Walzenzuges 1. Dargestellt sind zwei Laufschienen 6, die parallel zueinander entsprechend einer Spurbreite des Schienenfahrwerks 20 bzw. 26 des Walzenzuges 1 auf einem Boden 4 ausgerichtet sind. Die Figuren zeigen diesbezüglich einen Rangierbetriebszustand, in dem der Walzenzug 1 auf seinem Verdichtungsfahrwerk 10 bzw. seinen Verdichtungswalzen 14, 16 die Laufschienen 6 so anfährt, dass die Schienenfahrwerke 20, 26 mit den Laufschienen 6 in Wirkeingriff gebracht und der Walzenzug 1 in einem Schienentransportbetrieb abtransportiert werden können.

Dazu fährt der Walzenzug 1, wie in den Fig. 3 und 4 dargestellt, die Laufschienen 6 über die erste Verdichtungswalze 14 derart in einer Eingleisrichtung R_{E} an, dass das der ersten Verdichtungswalze 14 zugeordnete erste Schienenfahrwerk 20 mit den jeweiligen Laufschienen 6 in Wirkverbindung bewegt werden kann (siehe Fig. 4 und 5). Erfindungsgemäß ist dabei das Knickgelenk 30 dearretiert, sodass ein Verschwenken der beiden Verdichtungswalzen 14, 16 relativ zueinander um die Schwenkachse A_{S} möglich ist Auf diese Weise lässt sich der Walzenzug 1 sehr einfach auf die Laufschienen 6 "einfädeln".

In der in Fig. 4 dargestellten ausgerichteten Position des Walzenzuges 1 bzw. der ersten Verdichtungswalze 14 und des zugeordneten ersten Schienenfahrwerkes 20, kann die erste Verdichtungswalze 14 durch ein Verschwenken des ersten Schienenfahrwerkes 20 außer Wirkeingriff mit dem Boden 4' gebracht werden. In diesem Zustand greifen, wie in Fig. 5 gezeigt, die Rollen 28 des Schienenfahrwerkes 20 derart in die Laufschienen 6 ein, dass die erste Verdichtungswalze 14 vom Boden 4' abgehoben wird. In diesem Zustand steht die zweite Verdichtungswalze 16 noch in Bodenkontakt, wobei das zugeordnete zweite Schienenfahrwerk 26 angehoben ist

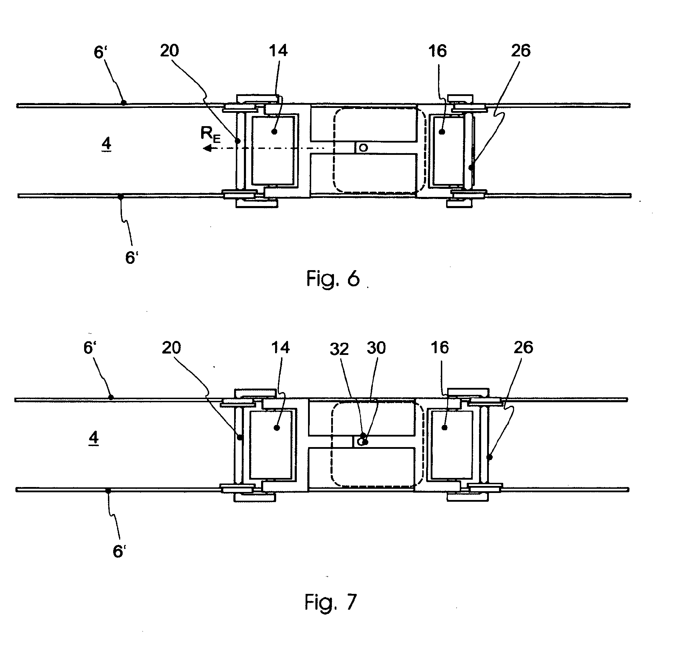

Wie in Fig. 6 gezeigt, wird in einem weiteren Verfahrensschritt dann der Walzenzug 1 entlang der Verfahrrichtung R_{E} derart weiter verfahren, dass sich die zweite Verdichtungswalze 16 bzw. das zweite Schienenfahrwerk 26 entlang der Laufschienen 6 ausrichtet. Dieses Ausrichten erfolgt automatisch, ohne dass es einer aufwendigen Kontrolle durch einen Bediener bedarf.

Wie in Fig. 7 dargestellt, kann nun, nachdem der Walzenzug 1 auch mit der zweiten Verdichtungswalze 16 bzw. dem zweiten Schienenfahrwerk 26 richtig zu den Laufschienen 6 ausgerichtet ist, auch das zweite Schienenfahrwerk 26 so gegen den Boden 4 verschwenkt werden, dass sich die zweite Verdichtungswalze 16 von diesem abhebt Dieser Zustand ist in Fig. 1 durch die nicht gestrichelt dargestellten in Richtung des Bodens 4' verschwenkten Schienenfahrwerke 20, 26 dargestellt.

Nach dem vollständigen Verschwenken der beiden Schienenfahrwerke 20, 26 wird in einem letzten Verfahrensschritt ein Arretierungsmittel der Blockiereinrichtung 51, beispielsweise der Arretierungsbolzen 32, so bewegt, dass er das Knickgelenk 30 der Lenkeinrichtung 50 arretiert. Durch diese Arretierung wird der Rangierbetrieb beendet und der Steuereinrichtung 8 (siehe Fig. 2) ein entsprechendes Signal gegeben, in den Schienentransportbetrieb zu wechseln. Die Steuereinrichtung 8 kann dann mögliche Einschränkungen beim Betrieb der jeweiligen Fahrwerke 10, 20, 26 und deren Antriebseinrichtungen etc. aufheben bzw. neu setzen. So kann beispielsweise dann den jeweilig zweiten Antriebseinrichtungen 22 der Schienenfahrwerke 20, 26 (siehe Fig. 1 u. 2) die vollständige Leistung zugewiesen werden, um einen schnellen Schienentransport zu ermöglichen.

Das Abgleisen des erfindungsgemäßen Walzenzuges 1 erfolgt im Wesentlichen auf ähnliche entgegengesetzte Weise, wobei hier nicht zwingend zuerst mit dem zweiten Schienenfahrwerk 26 begonnen werden muss. Natürlich ist es auch möglich, das zuvor beschriebene Verfahren entsprechend rückwärts zu durchlaufen, wobei in einem ersten Verfahrensschritt eben das erste Schienenfahrwerk 20 angehoben und die Wirkverbindung zwischen der ersten Verdichtungswalze 14 und dem Boden 4 hergestellt wird. Ansonsten entsprechen die folgenden Verfahrenschritte dem erfindungsgemäßen Verfahren zum Eingleisen.

## Patentansprüche

1. Vorrichtung zur Bodenverdichtung, insbesondere Walzenzug,
mit wenigstens einem Verdichtungsfahrwerk (10), das über eine erste Antriebseinrichtung (12) in einem Verdichtungsbetrieb zur Bodenverdichtung und zum Verfahren der Vorrichtung (1) antreibbar ist, wobei es eine erste Verdichtungswalze (14) und wenigstens eine zweite Verdichtungswalze (16) oder dergleichen Fahrmittel umfasst,
mit wenigstens einem Schienenfahrwerk (20, 26) für einen Schienentransportbetrieb, in dem die Vorrichtung (1) auf wenigstens einer am Boden (4) verlaufenden Laufschienen (6) verfahrbar ist, wobei das Schienenfahrwerk (20, 26) über wenigstens ein Stellmittel (24) derart bewegbar an der Vorrichtung (1) angeschlagen ist, dass es mit der am Boden (4) verlaufenden Laufschiene (6) derart in Wirkeingriff bringbar ist, dass das Verdichtungsfahrwerk (10) außer Wirkeingriff mit dem Boden (4) tritt,
mit einer Lenkeinrichtung (50), über die die Vorrichtung zur Bodenverdichtung, insbesondere der Walzenzug, im Verdichtungsbetrieb lenkbar ist und
mit einer Blockiereinrichtung (51), die zur Arretierung der Lenkeinrichtung (50) in wenigstens einer Lenkstellung zumindest im Schienentransportbetrieb ausgebildet ist

2. Vorrichtung nach Anspruch 1,
**dadurch gekennzeichnet,**
**dass** eine zweite Antriebseinrichtung (22) vorgesehen ist, über die das Schienenfahrwerk (20, 26) unabhängig vom Verdichtungsfahrwerk (10) antreibbar ist

3. Vorrichtung nach einem der vorhergehenden Ansprüche, insbesondere Anspruch 2,
**dadurch gekennzeichnet,**
**dass** die erste und/oder die zweite Antriebseinrichtung (12, 22) derart ausgebildet und über eine Steuereinrichtung (8) ansteuerbar sind, dass in einem Rangierbetrieb sowohl das Verdichtungsfahrwerk (10) als auch das Schienenfahrwerk (20, 26) antreibbar, und im Verdichtungsbetrieb und im Schienentransportbetrieb nur das Verdichtungsfahrwerk (10) bzw. das Schienenfahrwerk (20, 26) antreibbar sind.

4. Vorrichtung nach einem der vorhergehenden Ansprüche,
**dadurch gekennzeichnet,**
**dass** die erste Verdichtungswalze (14) und die wenigstens zweite Verdichtungswalze (16) oder dergleichen Fahrmittel des Verdichtungsfahrwerks (10) unabhängig voneinander über das wenigstens eine Schienenfahrwerk (20, 26) außer und/oder in Wirkeingriff mit dem Boden (4) bringbar und/oder haltbar sind.

5. Vorrichtung nach einem der vorhergehenden Ansprüche, insbesondere Anspruch 4,
**dadurch gekennzeichnet,**
**dass** an der Vorrichtung (1) wenigstens ein erstes und wenigstens ein zweites Schienenfahrwerk (20, 26) derart angeordnet und ausgebildet sind, dass die erste Verdichtungswalze (14) über das erste Schienenfahrwerk (20) und die zweite Verdichtungswalze (16) über das zweite Schienenfahrwerk (26) unabhängig von einander außer und/oder in Wirkeingriff mit dem Boden (4) bringbar und/oder haltbar sind.

6. Vorrichtung nach einem der vorhergehenden Ansprüche, insbesondere Anspruch 5,
**dadurch gekennzeichnet,**
**dass** die Vorrichtung (1) derart ausgebildet ist, dass im Rangierbetrieb wenigstens das der ersten Verdichtungswalze (14) zugeordnete erste Schienenfahrwerk (20) zusammen mit der zweiten Verdichtungswalze (16) antreibbar und insbesondere darüber die Vorrichtung (1) verfahrbar ist, oder umgekehrt

7. Vorrichtung (1) nach einem der vorgehenden Ansprüche, insbesondere einem der Ansprüche 4 bis 6,
**dadurch gekennzeichnet,**
**dass** eine Steuereinrichtung (8) vorhanden ist, die im Schienentransportbetrieb das Verfahren der Vorrichtung (1) über das Schienenfahrwerk (20) auf der Laufschiene (6) nur dann erlaubt, wenn die Lenkeinrichtung (50) durch die Blockiereinrichtung (51) arretiert ist.

8. Vorrichtung nach einem der vorhergehenden Ansprüche, insbesondere einem der Ansprüche 4 bis 7,
**dadurch gekennzeichnet,**
**dass** die Lenkeinrichtung (5) ein arretierbares Knickgelenk (30) umfasst, über das die erste Verdichtungswalze (14) relativ zu der zweiten Verdichtungswalze (16) wenigstens um eine Achse (A_{S}) senkrecht zur Bodenoberfläche (5) verschwenkbar ist, und wobei die Blockiereinrnichtung (51) zur Arretierung des Knickgelenks (30) ausgebildet ist.

9. Vorrichtung nach Anspruch 8,
**dadurch gekennzeichnet,**
**dass** die Steuereinrichtung (8) in der Weise ausgebildet ist, dass sie im Schienentransportbetrieb das Verfahren der Vorrichtung (1) über das Schienenfahrwerk (20) auf der Laufschiene (6) nur dann erlaubt, wenn das Knickgelenk (30) durch die Blockiereinrichtung (51) arretiert ist.

10. Vorrichtung nach einem der Ansprüche 8 oder 9,
**dadurch gekennzeichnet,**
**dass** die Steuereinrichtung (8) derart ausgebildet ist, dass sie bei nicht arretiertem Knickgelenk (30) ein Verfahren der Vorrichtung (1) nur in einem Rangierbetrieb und insbesondere nur mit reduzierter Verfahrgeschwindigkeit erlaubt

11. Vorrichtung nach einem der vorhergehenden Ansprüche, insbesondere einem der Ansprüche 8 bis 10,
**dadurch gekennzeichnet,**
**dass** das Knickgelenk (30) über wenigstens einen Arretierungsbolzen (32) oder dergleichen Arretierungsmittel arretierbar ist, wobei wenigstens ein Sensorelement (34) derart vorgesehen ist, das die Arretierungsposition des Arretierungsmittels (32) detektiert und ein entsprechendes Detektionssignal an die Steuereinrichtung (8) weiterleitet

12. Verfahren zum Aufgleisen einer Vorrichtung (1) zur Bodenverdichtung gemäß einem der vorhergehenden Ansprüche, wobei die Vorrichtung ein Verdichtungsfahrwerk (10) mit einer ersten Verdichtungswalze (14) und einer zweiten Verdichtungswalze (16) oder dergleichen Fahrmittel aufweist, die relativ zueinander über ein arretierbares Knickgelenk (30) wenigstens um eine Achse (As) senkrecht zur Bodenoberfläche (5) verschwenkbar, über jeweils wenigstens ein Schienenfahrwerk (20) außer Wirkeingriff mit dem Boden (4) bringbar und in einem Schienentransportbetrieb auf wenigstens einer am Boden (4) verlaufenden Laufschiene (6) verfahrbar sind, mit folgenden Schritten:
• Anfahren der wenigstens einen Laufschiene (6) mittels des Verdichtungsfahrwerks (10) in einer Eingleisrichtung (RE) derart, dass das der ersten Verdichtungswalze (14) zugeordnete erste Schienenfahrwerk (20) mit dieser in Wirkeingriff bewegt werden kann;
• Bewegen des ersten Schienfahrwerkes (20) in Wirkeingriff mit der Laufschiene (6) derart, dass die erste Verdichtungswalze (14) außer Wirkeingriff mit dem Boden (4) tritt;
• Verfahren der Vorrichtung (1) in Eingleisrichtung (R_{E}) mittels des ersten Schienenfahrwerkes (20) und der zweiten Verdichtungswalze (16) entlang der Laufschiene (6);
• Bewegen des zweiten Schienfahrwerkes (26) in Wirkeingriff mit der Laufschiene (6) derart, dass auch die zweite Verdichtungswalze (16) außer Wirkeingriff mit dem Boden (4) tritt, nach dem automatischen Ausrichten des zweiten Schienenfahrwerks (26) durch das Verfahren der Vorrichtung (1) in Eingleisrichtung (R_{E});
• Arretieren der Lenkeinrichtung (50) und insbesondere des Knickgelenkes (30) zwischen der ersten und der zweiten Verdichtungswalze (14, 16).

## Claims

1. A device for soil compaction, in particular a single-drum compactor,
comprising at least one compaction chassis (10), which is drivable via a first drive unit (12) in compaction operation for soil compaction and for moving the device (1), and which comprises a first compaction drum (14) and at least one second compaction drum (16) or similar travel means,
comprising at least one railway chassis (20, 26) for railway transport operation, in which the device (1) is movable on at least one running rail (6) extending on the ground (4), wherein the railway chassis (20, 26) is attached to the device (1) so it is movable via at least one positioning means (24) such that it can be moved into operational engagement with the running rail (6) extending on the ground (4) in such a manner that the compaction chassis (10) is moved out of operational engagement with the ground (4),
comprising a steering unit (50), via which the device for soil compaction, in particular the single-drum compactor, can be steered in compaction operation, and
comprising a blocking unit (51), which is implemented for locking the steering unit (50) in at least one steering position at least in railway transport operation.

2. The device according to claim 1,
**characterized in that**
a second drive device (22) is provided, via which the railway chassis (20, 26) can be driven independently of the compaction chassis (10).

3. The device according to any one of the preceding claims, in particular claim 2,
**characterized in that**
the first and/or the second drive unit (12, 22) are implemented and controllable via a control unit (8) such that in maneuvering operation, both the compaction chassis (10) and also the railway chassis (20, 26) can be driven, while in compaction operation and in railway transport operation, only the compaction chassis (10) or the railway chassis (20, 26), respectively, can be driven.

4. The device according to any one of the preceding claims,
**characterized in that**
the first compaction drum (14) and the at least one second compaction drum (16) or similar travel means of the compaction chassis (10) can be moved and/or kept out of and/or into operational engagement with the ground (4) independently of one another via the at least one railway chassis (20, 26).

5. The device according to any one of the preceding claims, in particular claim 4,
**characterized in that**
at least one first and at least one second railway chassis (20, 26) are arranged on the device (1) and implemented such that the first compaction drum (14), via the first railway chassis (20), and the second compaction drum (16), via the second railway chassis (26), can be moved and/or kept out of and/or into operational engagement with the ground (4) independently of one another.

6. The device according to any one of the preceding claims, in particular claim 5,
**characterized in that**
the device (1) is implemented such that in maneuvering operation, at least the first railway chassis (20), which is associated with the first compaction drum (14), can be driven together with the second compaction drum (16), and in particular the device (1) is movable thereby, or vice versa.

7. The device (1) according to any one of the preceding claims, in particular any one of claims 4 to 6,
**characterized in that**
a control unit (8) is provided, which, in railway transport operation, allows for movement of the device (1) via the railway chassis (20) on the running rail (6) only if the steering unit (50) is locked by the blocking unit (51).

8. The device according to any one of the preceding claims, in particular any one of claims 4 to 7,
**characterized in that**
the steering unit (5) comprises a lockable articulated joint (30), via which the first compaction drum (14) is pivotable in relation to the second compaction drum (16) at least about an axis (A_{S}) perpendicular to the ground surface (5), the blocking unit (51) being implemented for locking said articulated joint (30).

9. The device according to claim 8,
**characterized in that**
the control unit (8) is implemented in such a manner that in railway transport operation, it allows for movement of the device (1) via the railway chassis (20) on the running rail (6) only if the articulated joint (30) is locked by the blocking unit (51).

10. The device according to any one of claims 8 or 9,
**characterized in that**
the control unit (8) is implemented such that it only allows for movement of the device (1) in maneuvering operation and in particular only at reduced travel speed when the articulated joint (30) is not locked.

11. The device according to any one of the preceding claims, in particular any one of claims 8 to 10,
**characterized in that**
the articulated joint (30) is lockable via at least one locking bolt (32) or similar locking means, wherein at least one sensor element (34) is provided such that it detects the locking position of the locking means (32) and transmits a corresponding detection signal to the control unit (8).

12. A method for re-railing a device (1) for soil compaction according to any one of the preceding claims, wherein the device has a compaction chassis (10) having a first compaction drum (14) and a second compaction drum (16) or similar travel means, which are pivotable in relation to one another via a lockable articulated joint (30) at least about an axis (A_{S}) perpendicular to the ground surface (5), which can each be moved out of operational engagement with the ground (4) via at least one railway chassis (20), and which are movable in railway transport operation on at least one running rail (6) extending on the ground (4), comprising the following steps:
• driving onto the at least one running rail (6) by means of the compaction chassis (10) in a railing direction (R_{E}) such that the first railway chassis (20) associated with the first compaction drum (14) can be moved into operational engagement therewith;
• moving the first railway chassis (20) into operational engagement with the running rail (6) such that the first compaction drum (14) moves out of operational engagement with the ground (4);
• moving the device (1) in the railing direction (R_{E}) by means of the first railway chassis (20) and the second compaction drum (16) along the running rail (6);
• moving the second railway chassis (26) into operational engagement with the running rail (6) such that the second compaction drum (16) also moves out of operational engagement with the ground (4), after the automatic alignment of the second railway chassis (26) by the movement of the device (1) in the railing direction (R_{E});
• locking the steering unit (50) and in particular the articulated joint (30) between the first and the second compaction drum (14, 16).

## Revendications

1. Dispositif pour le compactage du sol, en particulier un rouleau monocylindre,
comprenant au moins un châssis de compactage (10), qui peut être entraîné au moyen d'une première unité d'entraînement (12) dans une opération de compactage pour le compactage du sol et pour déplacer le dispositif (1), et qui comprend un premier rouleau de compactage (14) et au moins un deuxième rouleau de compactage (16) ou des moyens de déplacement similaires,
comprenant au moins un châssis ferroviaire (20, 26) pour une opération de transport ferroviaire, dans lequel le dispositif (1) est mobile sur au moins un rail de roulement (6) s'étendant sur le sol (4), dans lequel le châssis ferroviaire (20, 26) est réuni au dispositif (1) de manière à être déplaçable au moyen d'au moins un moyen de positionnement (24) de telle sorte qu'il puisse être amené en engagement opérationnel avec le rail de roulement (6) s'étendant sur le sol (4) d'une manière telle que le châssis de compactage (10) soit écarté d'un engagement opérationnel avec le sol (4),
comprenant une unité de commande de direction (50), au moyen de laquelle le dispositif pour le compactage du sol, en particulier le rouleau monocylindre, peut être dirigé en opération de compactage, et
comprenant une unité de blocage (51) qui est agencée pour verrouiller l'unité de commande de direction (50) dans au moins une position de braquage au moins dans une opération de transport ferroviaire.

2. Dispositif selon la revendication 1,
**caractérisé en ce que**
une seconde unité d'entraînement (22) est prévue, au moyen de laquelle le châssis ferroviaire (20, 26) peut être entraîné indépendamment du châssis de compactage (10).

3. Dispositif selon l'une quelconque des revendications précédentes, en particulier selon la revendication 2,
**caractérisé en ce que**
la première et la seconde unités d'entraînement (12, 22) sont agencées et contrôlables au moyen d'une unité de commande (8) de telle sorte que, en opération de manoeuvre, à la fois le châssis de compactage (10) et le châssis ferroviaire (20, 26) puissent être entraînés, alors qu'en opération de compactage et en opération de transport ferroviaire, uniquement soit le châssis de compactage (10), soit le châssis ferroviaire (20, 26), puisse être entraîné.

4. Dispositif selon l'une quelconque des revendications précédentes,
**caractérisé en ce que**
le premier rouleau de compactage (14) et ledit au moins un deuxième rouleau de compactage (16) ou moyens de déplacement similaires du châssis de compactage (10) puissent être déplacés et/ou maintenus hors, et/ou en, engagement opérationnel avec le sol (4) indépendamment les uns des autres par l'intermédiaire dudit au moins un châssis ferroviaire (20, 26).

5. Dispositif selon l'une quelconque des revendications précédentes, en particulier selon la revendication 4,
**caractérisé en ce que**
au moins un premier et au moins un deuxième châssis ferroviaires (20, 26) sont installés sur le dispositif (1) et agencés de telle sorte que le premier rouleau de compactage (14), par l'intermédiaire du premier châssis ferroviaire (20), et le deuxième rouleau de compactage (16), par l'intermédiaire du deuxième châssis ferroviaire (26), puissent être déplacés et/ou maintenus hors, et/ou en, engagement opérationnel avec le sol (4) indépendamment l'un de l'autre.

6. Dispositif selon l'une quelconque des revendications précédentes, en particulier selon la revendication 5,
**caractérisé en ce que**
le dispositif (1) est agencé de telle sorte que, en opération de manoeuvre, au moins le premier châssis ferroviaire (20), qui est associé au premier rouleau de compactage (14), peut être entraîné en même temps que le deuxième rouleau de compactage (16), et en particulier le dispositif (1) est ainsi mobile, ou vice versa.

7. Dispositif selon l'une quelconque des revendications précédentes, en particulier selon l'une quelconque des revendications 4 à 6,
**caractérisé en ce que**
une unité de commande (8) est prévue, qui, en opération de transport ferroviaire, n'autorise le déplacement du dispositif (1) par l'intermédiaire du châssis ferroviaire (20) sur le rail de roulement (6) que si l'unité de commande de direction (50) est verrouillée par l'unité de blocage (51).

8. Dispositif selon l'une quelconque des revendications précédentes, en particulier selon l'une quelconque des revendications 4 à 7,
**caractérisé en ce que**
l'unité de commande de direction (50) comprend un joint articulé verrouillable (30), au moyen duquel le premier rouleau de compactage (14) peut pivoter en relation avec le deuxième rouleau de compactage (16), au moins autour d'un axe (A_{S}) perpendiculaire à la surface du sol (5), l'unité de blocage (51) étant agencée pour verrouiller ledit joint articulé (30).

9. Dispositif selon la revendication 8,
**caractérisé en ce que**
l'unité de commande (8) est agencée d'une manière telle que, dans l'opération de transport ferroviaire, elle n'autorise le déplacement du dispositif (1) sur le rail de roulement (6), par l'intermédiaire du châssis ferroviaire (20), que si le joint articulé (30) est verrouillé par l'unité de blocage (51).

10. Dispositif selon l'une quelconque des revendications 8 ou 9,
**caractérisé en ce que**
l'unité de commande (8) est agencée de telle sorte qu'elle n'autorise le déplacement du dispositif (1) que dans l'opération de manoeuvre, et en particulier seulement avec une vitesse de déplacement réduite, lorsque le joint articulé (30) n'est pas verrouillé.

11. Dispositif selon l'une quelconque des revendications précédentes, en particulier selon l'une quelconque des revendications 8 à 10,
**caractérisé en ce que**
le joint articulé (30) est verrouillable au moyen d'au moins un boulon de verrouillage (32) ou de moyens de verrouillage similaires, au moins un élément de capteur (34) étant prévu de façon qu'il détecte la position de verrouillage sur les moyens de verrouillage (32) et envoie un signal de détection correspondant à l'unité de commande (8).

12. Procédé pour remettre sur rails un dispositif (1) pour le compactage du sol selon l'une quelconque des revendications précédentes, dans lequel le dispositif comprend un châssis de compactage (10) ayant un premier rouleau de compactage (14) et un deuxième rouleau de compactage (16) ou des moyens de déplacement similaires, qui peuvent pivoter les uns par rapport aux autres par l'intermédiaire d'un joint articulé verrouillable (30), au moins autour d'un axe (A_{S}) perpendiculaire à la surface (5) du sol, qui peuvent être déplacés hors d'engagement opérationnel avec le sol (4) par l'intermédiaire d'au moins un châssis ferroviaire (20), et qui sont déplaçables pour une opération de transport ferroviaire sur au moins un rail de roulement (6) s'étendant sur le sol (4), comprenant les étapes suivantes:
• conduite sur ledit au moins un rail de roulement (6) au moyen du châssis de compactage (10) dans une direction (R_{E}) de mise sur rails de telle sorte que le premier châssis ferroviaire (20) associé au premier rouleau de compactage (14) puisse être amené en engagement opérationnel avec le rail;
• déplacement du premier châssis ferroviaire (20) en engagement opérationnel avec le rail de roulement (6) de telle sorte que le premier rouleau de compactage (14) sorte d'engagement opérationnel avec le sol (4);
• déplacement du dispositif (1) dans la direction (R_{E}) de mise sur rails au moyen du premier châssis ferroviaire (20) et du deuxième rouleau de compactage (16) le long du rail de roulement (6);
• déplacement du deuxième châssis ferroviaire (26) en engagement opérationnel avec le rail de roulement (6) de telle sorte que le deuxième rouleau de compactage (16) sorte aussi d'engagement opérationnel avec le sol (4), après l'alignement automatique du deuxième châssis ferroviaire (26) par le déplacement du dispositif (1) dans la direction (R_{E}) de mise sur rails;
• verrouillage de l'unité de commande de direction (50) et en particulier du joint articulé (30) entre le premier et le deuxième rouleaux de compactage (14, 16).
